# EUROPÄISCHE PATENTSCHRIFT

(11) **EP 2 904 023 B1**
(45) Veröffentlichungstag und Bekanntmachung des Hinweises auf die Patenterteilung: **27.07.2016**
(21) Anmeldenummer: 13758890.1
(22) Anmeldetag: 06.09.2013
(51) Int. Cl.: C08F 265/06, C09D 151/06

(54) **WÄSSRIGE BINDEMITTEL FÜR HEISSSIEGELANWENDUNGEN**
AQUEOUS BINDERS FOR HEAT-SEALING APPLICATIONS
LIANTS AQUEUX POUR DES APPLICATIONS DE THERMOSCELLAGE

(30) Priorität: 04.10.2012 DE 102012218108
(43) Veröffentlichungstag der Anmeldung: 12.08.2015
(73) Patentinhaber: Evonik Röhm GmbH, 64293 Darmstadt (DE)
(72) Erfinder: HERMES, Florian, 60313 Frankfurt (DE); STURM, Dominik, 64560 Riedstadt (DE); GOLDITZ, Christian, 63628 Bad Soden Salmünster (DE); WICKE, Michael, 64342 Seeheim-Jugenheim (DE); JUNG, Herbert, 63791 Karlstein (DE); HARTMANN, Jürgen, 64295 Darmstadt (DE); KELLER, Bruno, 55263 Wackernheim (DE)
(86) Internationale Anmeldenummer: PCT/EP2013/068471
(87) Internationale Veröffentlichungsnummer: WO 2014/053282

(56) Entgegenhaltungen:
- EP-A1- 1 008 635
- EP-A2- 0 574 803

## Beschreibung

### Gebiet der Erfindung

Die vorliegende Erfindung betrifft wässrige Bindemittel und daraus hergestellte Heißsiegellacke für heißsiegelbare Beschichtungen, welche ohne Einsatz eines Primers auf Aluminium haften, eine gute Siegelbarkeit der beschichteten Aluminiumfolie gegen PS und/oder PVC ermöglichen und sich weiterhin durch eine gute Blockfestigkeit auch bei Temperaturen über 40 °C auszeichnen.

Heißsiegelsysteme zur Beschichtung von Aluminiumfolien gegenüber PS-, PVC- oder auch PP-Oberflächen sind bereits seit Jahren etablierte Beschichtungsmittel in der Lebensmittelindustrie. So finden sich solche Heißsiegelbeschichtungen auf Yoghurtbecherdeckeln genauso wie auf der Innenseite von Blistern, z.B. für Medikamente. Etablierte Systeme sind zumeist basierend auf organischen Lösungen oder organischen Dispersionen. Schon seit Jahren ist daher die Entwicklung eines wässrigen Heißsiegellacks im Interesse der Entwicklung.

### Stand der Technik

US 6,194,514 beschreibt explizit wässrige Zweischichtsysteme bestehend aus einem Primer auf Aluminium sowie einer zweiten Schicht eines wässrigen Bindemittels auf dem getrockneten Primer. Als Primer wird z.B. eine wässrige Poly(meth)acrylat-Dispersion beschrieben, welche aus zwei Copolymerisaten besteht. Eines dieser Copolymerisate enthält dabei 2 bis 10 Gew% glycidyl- oder hydroxylfunktionelle Monomere und das andere Copolymerisat enthält 2 bis 10 Gew% Acryl- oder Itaconsäure. EP 0 417 570 offenbart eine wässrige Copolymer-Dispersion zur Versiegelung oben genannter Materialien. Dieses Copolymerisat besteht zumindest zu 70 Gew% aus Methacrylaten mit C1- bis C4-Alkylestern sowie aus mindestens einem funktionellen Monomer aus der Gruppe der Acrylamide, Methacrylamide, Aminoalkylacrylate oder Aminoalkylmethacrylate. Diese Systeme zeigen zwar exzellente Heißsiegelfestigkeiten, funktionieren aber ausschließlich als Zweischichtsysteme und benötigen deutlich längere Einbrennzeiten der Lacke als etablierte Lösungsmittel basierte Systeme.

In DE 3921256 ist eine wässrige Polymerdispersion als Heißsiegellack beschrieben. Hier werden aus Lösungspolymerisaten unter Zugabe von Wasser und Ammoniak und anschließende destillative Entfernung des Lösungsmittels Sekundärdispersionen hergestellt. Dieses Verfahren ist sehr aufwendig. Zudem ist es sehr schwierig, die Lösungsmittelreste wirklich vollständig zu entfernen, was insbesondere bei Anwendungen mit Lebensmittelkontakt von Nachteil sein kann.

EP 0 574 803 beschreibt wässrige Dispersionen für siegelbare Beschichtungen, die zwei Copolymerisate mit Glassübergangstemperaturen von 50 bis 150 °C bzw. von -50 bis 50 °C enthalten. Dabei weist eines der beiden Copolymerisate einen Gehalt an säurefunktionellen Monomeren zwischen 3 und 70 Gew% auf. Diese Systeme weisen jedoch keine gute Kombination aus Block- und Heißsiegelnahtfestigkeit auf. Unter der Blockfestigkeit wird dabei die unerwünschte Haftung des Heißsiegellacks gegenüber einer zweiten Aluminiumfolie bzw. einer zweiten mit einem Lack beschichteten Aluminiumfolie bei Temperaturen unterhalb der Siegeltemperatur verstanden. Die Blockfestigkeit spielt insbesondere in Bezug auf die Lagerung von beschichteten Aluminiumfolien eine Rolle.

In WO 2011/017388 wird eine wässrige Dispersion für heißsiegelbare Beschichtungen, enthaltend ein erstes Copolymer mit einer Glasübergangstemperatur T_{g} zwischen -60 und 0 °C, sowie 0,2 bis 10 Gew% einer ethylenisch ungesättigten Säure bzw. deren Anhydrid, beschrieben. Zusätzlich ist ein zweites, hartes Copolymer mit einer Glasübergangstemperatur zwischen 50 und 120 °C enthalten. Auch diese Systeme weisen keine ausreichende Kombination aus Block- und Heißsiegelnahtfestigkeit auf.

US 6,368,707 beschreibt heißsiegelbare Substrate bestehend aus einer Copolymer-Dispersion, in der ein (meth)acrylat-basiertes Polymer mit einer Glasübergangstemperatur von höchstens -10 °C, welche mittels Emulsionspolymerisation hergestellt wurde, mit einem Copolymer mit einer Glasübergangstemperatur von über 20°C, welches ein wasserlöslich bzw. wasserdispergierbares Copolymer ist, dessen Carboxyl-Gruppen mit einer Base neutralisiert wurden, enthalten ist. Siegelbarkeit gegen Aluminium wird nicht beschrieben.

### Aufgabe

Aufgabe der vorliegenden Erfindung war es vor dem Hintergrund des Standes der Technik, ein neuartiges Verfahren zur Beschichtung von Aluminiumfolien mit einer wässrigen Bindemitteldispersion als Heißsiegellack und zur Versiegelung der Aluminiumfolie gegen PS oder PVC zu entwickeln.

Insbesondere war es Aufgabe der vorliegenden Erfindung ein entsprechendes Bindemittel zu entwickeln, mit dem Heißsiegelnahtfestigkeiten nach Auftrag ohne Primer von mindestens 5 N/15 mm realisiert werden können.

Ganz besonders war es Aufgabe der vorliegenden Erfindung, ein Verfahren zum Heißsiegeln mit wässrigen Dispersionen zur Verfügung zu stellen, welches angemessene Trocknungszeiten und nach dem Siegeln gute Blockfestigkeiten aufweist.

Darüber hinaus war es Aufgabe der vorliegenden Erfindung, ein Verfahren zu entwickeln, in dem eine wässrige Bindemitteldispersion verwendet wird, die frei von organischen Lösungsmitteln ist, und die ohne die Verwendung solcher Lösungsmittel hergestellt werden kann. Insbesondere war es Aufgabe der vorliegenden Erfindung, eine wässrige Bindemitteldispersion zur Verfügung zu stellen, die auch ohne Zusatz von Ammoniak funktioniert.

Insbesondere war es Aufgabe der Erfindung, dass bei Versiegelung von Aluminium gegen Polystyrol die Bruchstelle auf Seite des Polystyrols liegt.

Weitere nicht explizit genannte Aufgaben können sich aus der Beschreibung, den Beispielen oder direkt aus dem Stand der Technik ergeben.

### Lösung

Gelöst werden die Aufgaben durch die neuartige Verwendung einer wässrigen Dispersion in einem Heißsiegellack zur Versiegelung von Aluminiumoberflächen gegen Styrol, PET, PLA (Polymilchsäure) oder PVC. Dabei setzt sich der Heißsiegellack zu mindestens 50 Gew%, bevorzugt zu 70 bis 95 Gew% aus dieser wässrigen Dispersion zusammen.

Die erfindungsgemäß verwendete wässrige Dispersion weist dabei eine erste Polymerphase mit einer Glasübergangstemperatur zwischen -20 und 30 °C, bevorzugt zwischen -10 und 25 °C, besonders bevorzugt zwischen -5 und 5 °C und eine zweite Polymerphase mit einer Glasübergangstemperatur zwischen 20 und unter 50 °C, bevorzugt zwischen 30 und 45 °C auf. Dabei enthält die zweite Polymerphase bezogen auf die Summe beider Polymerphasen 2 bis 10 Gew% mit Methacrylaten copolymerisierbare Säuren.

Der Heißsiegellack wird vor dem Siegeln bevorzugt einschichtig auf die Aluminiumoberfläche aufgetragen. Die enthaltene wässrige Dispersion enthält dabei bevorzugt zwischen 15 und 64 Gew% Polymer oder Polymere. Diese wiederum weisen bevorzugt zwischen 25 und 78 Gew%, besonders bevorzugt 37 bis 70 Gew%, insbesondere bevorzugt 49 bis 65 Gew% eines Alkylester der Methacrylsäure, bevorzugt zwischen 4 und 40 Gew%, besonders bevorzugt 12 bis 35 Gew% und insbesondere bevorzugt 17 bis 30 Gew% eines Alkylester der Acrylsäure, bevorzugt zwischen 2 und 9 Gew%, besonders bevorzugt 3 bis 8 Gew% einer mit Methacrylaten copolymerisierbaren Säure, bei der es sich bevorzugt um (Meth)acrylsäure handelt, und bevorzugt bis 20 Gew%, besonders bevorzugt 4 bis 20 Gew% und ganz besonders bevorzugt 8 bis 15 Gew% eines weiteren Monomer, das mit (Meth)acrylaten copolymerisierbar ist, jedoch selbst kein (Meth)acrylat ist, und bei dem es sich bevorzugt um Styrol handelt, auf.

Darüber hinaus können das oder die Polymere in der Dispersion zusätzlich 2 bis 12 Gew%, bevorzugt 3 bis 7 Gew% und besonders bevorzugt 4 bis 6 Gew% eines Alkylesters der (Meth)acrylsäure mit mindestens einer weiteren funktionellen Gruppe enthalten. Bei diesem Alkylester der (Meth)acrylsäure mit mindestens einer weiteren funktionellen Gruppe handelt es sich bevorzugt um Hydroxyethyl(meth)acrylat.

Die Formulierung (Meth)acrylsäure beschreibt in diesem Zusammenhang Methacrylsäure, Acrylsäure oder eine Mischung aus diesen. Entsprechendes gilt für die Formulierung (Meth)acrylat, welche sowohl Methacrylate als auch Acrylate oder Mischungen dieser umfasst. Die Formulierungen Acrylat bzw. Methacrylat sind dagegen jeweils genau als solche zu verstehen.

Insbesondere betrifft die vorliegende Erfindung die Verwendung einer wässrigen Dispersion in einem Heißsiegellack, wobei die Polymere in dieser Dispersion in Summe zusammengesetzt sind aus 25 bis 78 Gew%, bevorzugt 37 bis 70 Gew%, besonders bevorzugt 49 und 65 Gew% Methylmethacrylat und/oder Butylmethacrylat, 4 bis 40 Gew%, besonders bevorzugt 12 bis 35 Gew%, insbesondere bevorzugt 17 bis 30 Gew% und ganz besonders bevorzugt 20 bis 30 Gew% eines C₁-C₄-Alkylesters der Acrylsäure, 3 bis 7 Gew%, bevorzugt 4 bis 6 Gew% eines hydroxyfunktionellen (Meth)acrylats, bei dem es sich insbesondere bevorzugt um Hydroxyethylacrylat handelt, 2 bis 9 Gew%, bevorzugt 5 bis 7 Gew% (Meth)acrylsäure, wobei es sich besonders bevorzugt um eine Mischung aus Acrylsäure und Methacrylsäure handelt, und zu 4 bis 20 Gew%, bevorzugt 8 bis 15 Gew% Styrol.

Bevorzugt wird die wässrige Dispersion mittels Emulsionspolymerisation hergestellt. Dabei wird eine erste Monomermischung, die zu dem Polymer mit einer Glasübergangstemperatur zwischen -20 und 30 °C führt, vorgelegt und nach Polymerisation dieser Monomermischung wird eine zweite Monomermischung, die zu einem Polymer mit einer Glasübergangstemperatur zwischen 20 und unter 50 °C führt, zugegeben und polymerisiert.

Besonders bevorzugt enthält die erste Monomermischung dabei die hydroxyfunktionellen (Meth)acrylate und die zweite Monomermischung die mit (Meth)acrylaten copolymerisierbaren Carbonsäuren. Dabei liegt das Gewichtsverhältnis der beiden Monomermischungen zueinander zwischen 1 zu 9 und 8 zu 2.

Insbesondere kann die zweite Monomermischung unter Zuhilfenahme eines Reglers, vorzugsweise 0,2 Gew% n-DDM (n-Dodecylmercaptan) bezogen auf die Monomere, auspolymerisiert werden.

Insbesondere wird die Emulsionspolymerisation in wässriger Phase in Gegenwart von an sich bekannten anionischen, kationischen oder nichtionischen Emulgatoren und mindestens eines radikalbildenden Initiators in zweistufiger Reaktion hergestellt. Eine solche Emulsionspolymerisation kann bezüglich der Durchführung beispielsweise in H. Rauch-Puntigam, Th. Völker (Acryl- und Methacrylverbindungen, Springer-Verlag 1967, S. 217-230) nachgelesen werden. Dabei wird die erste Polymerisationsstufe mittels eines Zulaufverfahrens, wobei man zu einer Vorlage aus entionisiertem Wasser und Emulgator in einem geeigneten mit Rührer und Heizung ausgestatteten Reaktionsgefäss, nach Erreichen einer bestimmten Temperatur den Initiator, insbesondere anorganische Peroxide wie Kalium- oder Ammoniumperoxodisulfat (KPS, APS), vorzugsweise in Wasser gelöst, zugibt, durchgeführt. Der Gehalt an Initiator in der Vorlage liegt beispielsweise in einem Bereich zwischen 0,01 Mol% und 2 Mol% bezogen auf die Monomeren des Zulaufs der ersten Stufe.

Als ionische Emulgatoren, die in Mengen von 0,01 bis 2,0 Gew% bezogen auf die gesamte Monomermenge eingesetzt werden, kommen insbesondere anionische Emulgatoren infrage. Beispiel dafür sind AEROSOL OT75(R) der Cyanamid BV, REWOPOL SB DO 75 der Evonik Tego Chemie GmbH oder Dowfax 2A1 der Dow Europa SA. Dazu gibt man im Zulaufverfahren über einen gewissen Zeitraum, z.B. innerhalb von 2 Stunden, in erster Stufe das vorstehend charakterisierte Gemisch als Zulauf zu. Zulauf 1 enthält beispielsweise 20 bis 60 Gew% des gesamten Wassers zusammen mit den Monomeren der ersten Stufe.

Nach Polymerisation der ersten Stufe kann man noch über einen gewissen Zeitraum, beispielsweise über einen Zeitraum von einer Stunde bei erhöhter Temperatur, z. B. bei 80 °C nachrühren. Darauf kann, z.B. auf 30 °C, abgekühlt werden, bevor mit dem Zulauf der zweiten Monomerzusammensetzung begonnen wird. Dieser zweite Zulauf kann beispielsweise über einen Zeitraum von 30 min erfolgen. Es kann danach vorteilhaft sein, die Mischung über einen längeren Zeitraum von beispielsweise 4 Stunden einquellen zu lassen, bevor man auf die zweite Polymerisationstemperatur von z.B. 40 °C erhitzt und erneut Initiatoren zugibt. Hierbei werden bevorzugt Redoxinitiatoren verwendet. Beispiele dafür sind Peroxodisulfate, Dithionite und Eisensulfat. Nach der Zugabe wird eine Exotherme beobachtet, nach deren erreichen, die Temperatur höher, z.B. auf 80 °C, eingestellt wird. Abschließend wird beispielsweise für 2 Stunden zur Vervollständigung der Polymerisation nachgerührt. Alternativ kann die zweite Polymerisationsstufe gleichfalls als Zulaufpolymerisation, z.B. über einen Zeitraum von 2 Stunden, durchgeführt werden.

Alternativ zur Verwendung von ionischen Emulgatoren ist auch die Zugabe von 0,01 bis 5,0 Gew% nichtionischer Emulgatoren z. B. ethoxylierter Alkohole oder Methacrylsäureester von Methoxy-polyethylenglycolen, wie beispielsweise Carbowax 550 oder Alkylphenole möglich. Auch ist die Kombination von ionischen und nicht-ionischen Emulgatoren einsetzbar.

In einer optionalen Verwendung der erfindungsgemäßen Dispersion wird dieser vor der Versiegelung zur Einstellung des pH-Wertes in kleinen Mengen Ammoniak zugesetzt. Mit dieser Ausführungsform kann eine Verbesserung der kolloidalen Stabilität und der Beschichtungseigenschaften erreicht werden.

In der Regel kann die so hergestellte Dispersion unmittelbar als solche zur Beschichtung eingesetzt werden. In besonderen Fällen können begrenzte Mengen Verdickungsmittel, Antiblockiermittel oder Filmbildungshilfsmitteln zugesetzt werden. Die Beschichtung kann durch Sprühen, Streichen, Giessen, Tauchen, Rakeln oder Walzen aufgebracht werden. In der Regel erfolgt der Auftrag auf der Aluminiumfolie in einer solcher Dicke, dass beim Trocknen eine Schicht von 2 bis 10 µm gebildet wird.

Möglich ist auch die Verwendung der erfindungsgemäßen wässrigen Dispersion unter Zusatz einer organischen Lösung aus einem Polymethacrylat, z.B. in Form eines gelösten Suspensionspolymerisats wie z.B. DEGALAN^{®} P 24 der Evonik Industries. Alternativ ist auch die Zugabe von wässrigen Methacrylat-Dispersionen nach EP 0 417 570A1 wie z. B. DEGALAN^{®} 4032 D der Evonik Industries zu der erfindungsgemäßen Dispersion möglich.

In einer weiteren Anwendungsmöglichkeit kann auch die getrocknete Beschichtung, die mittels der erfindungsgemäßen Dispersion hergestellt wurde, mit einer Schicht eines Bindemittels nach EP 0 417 570A1, wie z. B. DEGALAN^{®} 4032 D, zur weiteren Verbesserung der Blockfestigkeit und Wasserfestigkeit beschichtet werden. Diese optionale Anwendung ist jedoch nicht bevorzugt, da mit einem solchen Vorgehen der Vorteil einer einschichtigen Heißsiegelschicht verloren würde und die erfindungsgemäßen Dispersionen bereits zu sehr guten Heißsiegeleigenschaften führen.

In der Praxis wird die Trocknung der beschichteten Aluminiumfolie zweckmäßig in einen Trockenofen oder in einem kontinuierlich durchlaufenden Trockentunnel, gegebenenfalls bei vermindertem Druck und bei Temperaturen zwischen 100 und 240 °C vorgenommen. Die erforderliche Trockenzeit ist im Allgemeinen umso kürzer, je höher die Trocknungstemperatur liegt und beträgt beispielsweise zwischen 5 sec und 5 min. Gegebenenfalls ist auch ein Mehrfachauftrag möglich. Vorzugsweise eigenen sich die wässrigen Dispersionen zum Auftrag auf nicht-poröse, geschlossene Substrat-Oberflächen wie die von Kunststoff-Folien oder insbesondere von Metallfolien, beispielsweise Aluminiumfolien oder Eisen.

Zum Heisssiegeln muss in der Beschichtung die Glasübergangstemperatur des Poly(meth)acrylats überschritten werden. Die Temperatur der Heißversiegelung muss umso höher über der erforderlichen Siegeltemperatur liegen, je kürzer die Kontaktzeit und umso schlechter die Wärmeleitung durch die Substratschicht ist. Dünne Metallfolien haben eine sehr gute Wärmeleitung und lassen eine Temperatur der Heißsiegelbacken zu, die nur wenig über der Schmelztemperatur des Poly(meth)acrylats liegt, wenn auch in der Praxis im Interesse einer möglichst schnellen Versiegelung meist deutlich höhere Heißsiegeltemperaturen, z.B. von 100 bis 240 °C gewählt werden. Die Glasübergangstemperatur eines Kunststoffsubstrats kann der Heißsiegeltemperatur Grenzen setzen. Um eine Versiegelung hoher Festigkeit zu erreichen, sollte ein Druck beim Heißversiegeln von mindestens 1 kp/qcm, vorzugsweise von 3 bis 6 kp/qcm angewendet werden.

Die Prüfung der Siegelnahtfestigkeit der Heißsiegelproben wird im Rahmen der vorliegenden Erfindung gemäß DIN 51 221 durchgeführt.

Die folgenden Beispiele dienen zur Erläuterung der Erfindung.

### Beispiele

Herstellvorschriften Beispiele 1-11 sowie Vergleichsbeispiele 1 und 3.

Die Durchführung einer Synthese und die Art der verwendeten Einsatzstoffe sind ausführlich anhand von Beispiel 9 beschrieben. Beispiel 9 unterschiedet sich von den Beispielen 1-8, Beispielen 10 und 11 sowie von den Vergleichsbeispielen 1 und 3 in der Monomerzusammensetzung der ersten und zweiten Stufe, welche Tabelle 1 entnommen werden kann, sowie in der Verteilung einiger Einsatzstoffe, die sich wie folgt berechnen: Die Polymerisationen wurden alle zweistufig geführt, dabei wurden jeweils 520 g Monomer auf beide Stufen verteilt. Der Emulgatorgehalt beträgt 0,52%, von dem 52,4% in der ersten Stufe, 47,6 % in der zweiten Stufe eingesetzt werden. Vom Emulgator der ersten Stufe werden dabei 10% in die Reaktorvorlage, 90% in der Emulsion eingesetzt. Die Emulsionen werden jeweils mit einem Wassergehalt von 34 Gew% angesetzt. Als Initiator werden 0,09505 mol% Ammoniumpersulfat (APS) bezogen auf die Monomere der ersten Stufe eingesetzt. Weiterhin werden 0,1062 mol% Initiator bezogen auf die Monomere der zweiten Stufen zu der Emulsion der zweiten Stufe zugesetzt.

### Herstellvorschrift Beispiel 9

In einen 1 Liter Quickfit Rundkolben mit Quickfit Deckel, Thermometer und Rührer werden 224 g VE-Wasser und 0,19 g Emulgator Rewopol SBDO 75 eingewogen und in einem Wasserbad unter Rühren (150 UpM) auf ca. 80 °C Innentemperatur aufgeheizt. Zur Herstellung der Emulsion der ersten Stufe werden in einer Woulffeschen Flasche 1,70 g Rewopol SBDO 75, 36,40g Hydroxyethylacrylat, 162,0g MMA, 165,6g n-Butylacrylat und 188,0g VE-Wasser eingewogen. Dieses Gemisch wird 5 min gerührt, 1 min ruhen gelassen und dann nochmals 15 min gerührt.

Die Reaktorvorlage wird auf eine Innentemperatur von 80 °C aufgeheizt und darauf werden 7,0 mL APS (10 gew%ig) zugegeben und für 5 min eingerührt. Für drei Minuten wird die Emulsion mit einer Dosierrate von 3,3 g/min dosiert. Dabei kommt es zu einem leichten Temperaturanstieg und die Dosierung wird für 4 min unterbrochen. Nun wird die restliche Emulsion mit einer Dosiergeschwindigkeit von 3,3 g/Min dosiert und nach Abschluss wird 20 min nachgerührt.

Zur Herstellung der Emulsion für die zweite Stufe werden in einer Woulffeschen Flasche 1,72 g Emulgator Rewopol SBDO 75, 15,6 g Acrylsäure, 31,2 g Styrol, 109,2 g n-Butylmethacrylat und 81 g VE-Wasser eingewogen. Dieses Gemisch wird 5 min gerührt, 1min ruhen gelassen und dann nochmals 15 min gerührt. Dazu werden 3,1 g Ammoniumpersulfat gegeben und kräftig eingerührt.

Nach Abschluss der Reaktionszeit für die erste Stufe wird die zweite Stufe mit einer Dosierrate von 3,3 g/min zudosiert, gefolgt von einer 60 minütigen Nachreaktionszeit. Nach Abkühlen der Dispersion wird diese über ein 150 µm Sieb filtriert.

### Herstellvorschrift Vergleichsbeispiel VB2

Vergleichbeispiel VB2 wurde gemäß Stand der Technik WO2011017388, Beispiel 2 hergestellt.

### Verwendetes Folienmaterial

Weichaluminiumfolien mit einer Dicke von 38 µm sowie PS- und PVC-Folien mit einer Dicke von 500 µm wurden verwendet.

### Auftrag der Heißsiegeldispersion im Labor

Das wässrige Bindemittel wurde mit dem K-Hand Coater Nr. 3 aufgezogen.

### Trocknung der beschichteten Folien im Labor

Die Folien wurden direkt nach Applikation des wässrigen Bindemittels für 15 Sekunden bei 180°C im Umluftofen getrocknet.

### Heißversiegelung und Ermittlung der Siegelnahtfestigkeit

Die Versiegelungen wurden einem Heißsiegelgerät der Firma LOWA GmbH versiegelt.

### Siegelbedingungen:

| | |
|---|---|
| Temperatur: | 180°C |
| Druck: | 3 bar |
| Zeit: | 1 sec. |
| Siegelfläche: | 10 x 100 mm |

Zur Ermittlung der Siegelnahtfestigkeit wurden Proben in 15 mm breite Streifen geschnitten und mit der Zugprüfmaschine von Instron, Modell Nr. 1195 oder Zwick, Modell Nr. 1454 bei einer Geschwindigkeit von 100 mm/min. gezogen. Es wurde darauf geachtet, dass während des Abzugsversuches die bereits voneinander getrennten Folienteile mit dem noch unbeanspruchten Rest einen Winkel von 90° bilden.

### Wasserlagerung

Zur Bestimmung der Wasserbeständigkeit des Lackes werden die gesiegelten Streifen für 48 h in Leitungswasser gelegt, im Anschluss abgetrocknet und darauf wird, wie oben beschrieben, die Heißsiegelfestigkeit bestimmt.

### Bestimmung des Blockpunktes:

Zur Bestimmung des Blockpunktes wird das oben beschriebene Heißsiegelgerät verwendet, bei dem jedoch eine der beheizten Backen durch eine nicht-beheizte Gummibacke ersetzt wurde. Es wurden zwei lackierten Aluminiumstreifen (Vorbereitung wie oben beschrieben) Lack gegen Lack bei einer definierten Temperatur mit einem bar Druck für 30 Sekunden in dem Gerät aneinandergepresst. Der Blockpunkt ist die Temperatur, an dem die Aluminiumstreifen aneinander haften bleiben, wenn nur einer der Streifen festgehalten wird. Bei geringeren Temperaturen reicht das Eigengewicht der Aluminiumstreifen, diese voneinander zu trennen. Es wurde in Abständen von 5 °C gemessen.

**Tabelle 1: Zusammensetzungen und Herstellung der Beispiele 1-9**

| | **Anteil Stufe 1 in %** | **Stufe 1** | | | **Stufe 2** | | | | |
|---|---|---|---|---|---|---|---|---|---|
| **Probe** | | **MMA** | **n-BA** | **HEA** | **BMA** | **AS** | **Styrol** | **n-DDM** | **TGS** |
| Beispiel 1 | 50 | 57 | 33 | 10 | 70 | 10 | 20 | | |
| Beispiel 2 | 60 | 44,5 | 45,5 | 10 | 69,8 | 10 | 20 | 0,2 | |
| Beispiel 3 | 50 | 44,5 | 45,5 | 10 | 70 | 10 | 20 | | |
| Beispiel 4 | 60 | 44,5 | 45,5 | 10 | 80 | 10 | 10 | | |
| Beispiel 5 | 60 | 44,5 | 45,5 | 10 | 69,8 | 10 | 20 | | 0,2 |
| Beispiel 6 | 50 | 48 | 52 | | 70 | 10 | 20 | | |
| Beispiel 7 | 50 | 48 | 42 | 10 | 70 | 10 | 20 | | |
| Beispiel 8 | 30 | 44,5 | 45,5 | 10 | 70 | 10 | 20 | | |
| Beispiel 9 | 70 | 44,5 | 45,5 | 10 | 70 | 10 | 20 | | |

| | | | | | | | | | |
|---|---|---|---|---|---|---|---|---|---|
| MMA: Methylmethacrylat; n-BA: n-Butylacrylat; HEA: 2-Hydroxyethylacrylat; BMA: n-Butylmethacrylat; AS: Acrylsäure; n-DDM: n-Dodecylmercaptan; TGS: Thioglycolsäure | | | | | | | | | |

**Tabelle 2: Zusammensetzung und Herstellung der Vergleichsbeispiele 1-3 sowie von Beispiel 10-11**

| | **Anteil Stufe 1 in %** | **Stufe 1** | | | | | | **Stufe 2** | | | | |
|---|---|---|---|---|---|---|---|---|---|---|---|---|
| **Probe** | | **MMA** | **BMA** | **EA** | **AS** | **BA** | **HEA** | **MMA** | **BMA** | **Styrol** | **EHMA** | **AS** |
| VB1 | 50 | 44,5 | | | | 45,5 | 10 | 70 | 10 | | 10 | 10 |
| VB2 | | siehe WO2011017388, Beispiel 2 | | | | | | | | | | |
| VB3 | 30 | 70 | 20 | | 10 | | | 70 | 10 | 20 | | |
| B10 | 60 | 24 | | 66 | | | 10 | 70 | 10 | 20 | | |
| B11 | 15 | 44,5 | | | 0 | 45,5 | 10 | 0 | 70 | 20 | 0 | 10 |

| | | | | | | | | | | | | |
|---|---|---|---|---|---|---|---|---|---|---|---|---|
| MMA: Methylmethacrylat; EA: Ethylacrylat; BA: n-Butylacrylat; HEA: 2-Hydroxyethylacrylat; BMA: n-Butylmethacrylat; AS: Acrylsäure; n-DDM: n-Dodecylmercaptan; TGS: Thioglycolsäure; EHMA: Ethylhexylmethacrylat | | | | | | | | | | | | |

**Tabelle 3: Eigenschaften der hergestellten Bindemittel aus Beispielen 1-11 sowie Vergleichsbeispielen 1-3**

| **Probe** | **HSF vs PS [N/15 mm]** | | | | **HSF vs. PVC [N/15 mm]** | | | | **Blockp. [°C]** | **Pg** | **Tg** | **Tg** |
|---|---|---|---|---|---|---|---|---|---|---|---|---|
| | | | **H₂O** | | | | **H₂O** | | | | **Stufe 1** | **Stufe 2** |
| | | Bruch. | | Bruch. | | Bruch. | | Bruch. | | **[nm]** | **[°C]** | **[°C]** |
| B 1 | 6 | PS | nb | nb | <1 | teils | nb | nb | 50 | 146 | 20 | 41 |
| B 2 | 8 | PS | 8 | PS | 7 | Al | 8 | teils | 45 | 161 | 0 | 41 |
| B 3 | 7 | PS | nb | nb | 6 | Al | nb | nb | 45 | 172 | 0 | 41 |
| B 4 | 7 | PS | nb | nb | 6 | Al | nb | nb | 40 | 145 | 0 | 34 |
| B 5 | 8 | PS | 8 | teils | 6 | Al | 5 | teils | 45 | 143 | 0 | 41 |
| B 6 | 2 | PS | nb | nb | 5 | Al | nb | nb | 45 | 150 | 0 | 41 |
| B 7 | 7 | PS | nb | nb | 5 | teils | nb | nb | 45 | 124 | 5 | 41 |
| B 8 | 7 | PS | 7 | PS | 2 | teils | 6 | teils | 50-55 | 181 | 0 | 41 |
| B 9 | 8 | PS | 7 | PS | 6 | Al | 4 | Al | 45 | 153 | 0 | 41 |
| B10 | 9 | PS | 6 | Al | 6 | Al | 5 | Al | 40 | 141 | 1 | 41 |
| B11 | 4 | PS | 5 | PS | 1 | nb | 1 | nb | 55 | 263 | 0 | 41 |
| VB1 | 1 | PS | nb | nb | 1 | PVC | nb | nb | 55-60 | 158 | 0 | 79 |
| | | Beide | | | | | | | | | | |
| VB2 | 6 | Seiten | 7 | teils | 5 | teils | 6 | teils | <35 | 78 | -15* | 56* |
| VB3 | 3 | Al | | | 1 | teils | | | 60 | 155 | 43 | 41 |

Mit "*" markierte Glasübergangstemperaturen wurden aus WO201101738 übernommen. In der Tabelle sind in der Spalte "HSF" die gemessenen Heißsiegelfestigkeiten gegen Polystyrol (PS) bzw. Polyvinylchlorid (PVC) angegeben. Die mit "H₂O" gekennzeichnete Spalte beschreibt die Heißsiegelfestigkeiten nach Wasserlagerung. In der Spalte "Blockp." sind die gemessenen Blockpunkte aufgezeigt. "Pg" beschreibt die Partikelgröße (bestimmt mit dem Gerät Beckmann Coulter LS 13320, angegeben sind die d50-Werte aus der Anzahl-Statistik), T_{g} (Stufe 1) und T_{g} (Stufe 2) sind die rechnerischen Glasübergangstemperaturen der jeweiligen Stufen. Die Berechnung der T_{g} erfolgt mittels der Fox-Gleichung.

Beispiele 1-9 und 11 enthalten Dispersionen mit identischen Monomerbausteinen, jedoch deutlich unterschiedlichen Zusammensetzungen innerhalb der einzelnen Stufen und insbesondere deutlich unterschiedlichen Verhältnissen von Stufe 1 zu Stufe 2. Trotz dieser breiten Variationen werden dennoch durchgehende gute Heißsiegelfestigkeiten bei guten Blockfestigkeiten erhalten. Bei Beispiel 11 - mit nur noch geringem Anteil an Stufe 1 - sind überraschenderweise noch gute Festigkeiten gegen PS nach Wasserlagerung zu beobachten. Beispiel 10 zeigt, dass die Verwendung von Butylacrylat nicht zwingend notwendig ist und dieses Monomer zum Beispiel durch Ethylacrylat ersetzt werden kann, sofern die dem Fachmann verständlichen Veränderungen an den Verhältnissen der einzelnen Monomere eingehalten werden. Die Verwendung von Monomeren mit längeren Seitenketten, wie z.B. n-Butylacrylat oder Ethylhexylacrylat lässt jedoch u.a. bessere Wasserbeständigkeiten der Lacke erwarten.

Vergleichsbeispiel 1 entspricht den Systemen aus dem Stand der Technik gemäß EP 0 574 803 und zeigt keine signifikanten Heißsiegelfestigkeiten.

Vergleichbeispiel 2 entspricht Beispiel 2 aus WO2011017388. Die Blockfestigkeit ist lediglich ungenügend.

Vergleichsbeispiel 3 zeigt nur ungenügende Heißsiegelfestigkeiten. Die Glasübergangstemperatur der ersten Stufe ist zu hoch.

## Patentansprüche

1. Verwendung einer wässrigen Dispersion in einem Heißsiegellack zur Versiegelung von Aluminiumoberflächen gegen Styrol, PET, PLA oder PVC, **dadurch gekennzeichnet, dass** der Heißsiegellack vor dem Siegeln einschichtig auf die Aluminiumoberfläche aufgetragen wird, dass der Heißsiegellack zu mindestens 50 Gew% aus der wässrigen Dispersion besteht, und dass die wässrige Dispersion eine erste Polymerphase mit einer Glasübergangstemperatur zwischen -20 und 30 °C und eine zweite Polymerphase mit einer Glasübergangstemperatur zwischen 20 und unter 50 °C aufweist, wobei die zweite Polymerphase bezogen auf die Summe beider Polymerphasen 2 bis 10 Gew% mit Methacrylaten copolymerisierbare Säuren enthält, wobei die Glasübergangstemperatur mittels der Fox-Gleichung berechnet list.

2. Verwendung einer wässrigen Dispersion gemäß Anspruch 1, **dadurch gekennzeichnet, dass** die Dispersion aus mindestens zwei Polymerphasen zwischen 15 und 64 Gew% Polymere enthält, die 25 bis 78 Gew% Alkylester der Methacrylsäure, 4 bis 40 Gew% Alkylester der Acrylsäure, 2 bis 9 Gew% mit Methacrylaten copolymerisierbare Säuren und bis 20 Gew% weitere Monomere, die mit (Meth)acrylaten copolymerisierbar sind, jedoch selbst kein (Meth)acrylate sind, aufweisen.

3. Verwendung einer wässrigen Dispersion gemäß Anspruch 1 oder 2, **dadurch gekennzeichnet, dass** die Polymere in der Dispersion 49 bis 65 Gew% eines Alkylesters der Methacrylsäure, 17 bis 30 Gew% eines Alkylesters der Acrylsäure, 3 bis 8 Gew% (Meth)acryläure und 8 bis 15 Gew% Styrol enthalten.

4. Verwendung einer wässrigen Dispersion gemäß mindestens einem der Ansprüche 1 bis 3, **dadurch gekennzeichnet, dass** die erste Polymerphase eine Glasübergangstemperatur zwischen -10 und 25 °C, insbesondere zwischen -5 und 5 °C aufweist und die zweite Polymerphase eine Glasübergangstemperatur zwischen 30 und 45 °C aufweist.

5. Verwendung einer wässrigen Dispersion gemäß mindestens einem der Ansprüche 1 bis 4, **dadurch gekennzeichnet, dass** die Polymere in der Dispersion zusätzlich 2 bis 12 Gew% eines Alkylesters der (Meth)acrylsäure mit mindestens einer weiteren funktionellen Gruppe enthält.

6. Verwendung einer wässrigen Dispersion gemäß Anspruch 5, **dadurch gekennzeichnet, dass** es sich bei dem Alkylesters der (Meth)acrylsäure mit mindestens einer weiteren funktionellen Gruppe um Hydroxyethyl(meth)acrylat handelt, und dass dieses zu 3 bis 7 Gew%, bevorzugt 4 bis 6 Gew% in den Polymeren enthalten ist.

7. Verwendung einer wässrigen Dispersion gemäß Anspruch 1, **dadurch gekennzeichnet, dass** die Polymere in Summe zusammengesetzt sind aus 37 bis 70 Gew% Methylmethacrylat und/oder Butylmethacrylat, 12 bis 35 Gew% eines C₁-C₄-Alkylesters der Acrylsäure, 3 bis 7 Gew% eines hydroxyfunktionellen (Meth)acrylats, 2 bis 9 Gew% (Meth)acrylsäure und zu 4 bis 20 Gew% Styrol.

8. Verwendung einer wässrigen Dispersion gemäß Anspruch 7, **dadurch gekennzeichnet, dass** die Polymere in Summe zusammengesetzt sind aus 49 bis 65 Gew% Methylmethacrylat und/oder Butylmethacrylat, 20 bis 30 Gew% eines C₁-C₄-Alkylesters der Acrylsäure, 4 bis 6 Gew% eines hydroxyfunktionellen (Meth)acrylats, 5 bis 7 Gew% (Meth)acrylsäure und zu 8 bis 15 Gew% Styrol.

9. Verwendung einer wässrigen Dispersion gemäß mindestens einem der Ansprüche 1 bis 8, **dadurch gekennzeichnet, dass** die wässrige Dispersion mittels Emulsionspolymerisation hergestellt wurde, wobei eine erste Monomermischung, die zu dem Polymer mit einer Glasübergangstemperatur zwischen -20 und 30 °C führt, vorgelegt wird und nach Polymerisation dieser Monomermischung eine zweite Monomermischung, die zu dem Polymer mit einer Glasübergangstemperatur zwischen 20 und unter 50 °C führt, zugegeben und polymerisiert wird, und dass die beiden Polymerphasen in Form eines Kern-Schale-Partikels vorliegen.

10. Verwendung einer wässrigen Dispersion gemäß mindestens einem der Ansprüche 1 bis 9, **dadurch gekennzeichnet, dass** die erste Monomermischung die hydroxyfunktionellen (Meth)acrylate enthält, dass die zweite Monomermischung die mit (Meth)acrylaten copolymerisierbare Carbonsäure enthält, und dass das Gewichtsverhältnis der beiden Monomermischungen zueinander zwischen 1 zu 9 und 8 zu 2 liegt.

11. Verwendung einer wässrigen Dispersion gemäß mindestens einem der Ansprüche 1 bis 10, **dadurch gekennzeichnet, dass** die zweite Monomermischung unter Zuhilfenahme eines Reglers, vorzugsweise 0,2 Gew% n-DDM bezogen auf Monomer, auspolymerisiert wird.

## Claims

1. Use of an aqueous dispersion in a heat-sealing lacquer for the sealing of aluminium surfaces with respect to styrene, PET, PLA or PVC, **characterized in that**, prior to the sealing process, the heat-sealing lacquer is applied in a single layer to the aluminium surface, that the heat-sealing lacquer is composed of at least 50% by weight of the aqueous dispersion, and that the aqueous dispersion comprises a first polymer phase with a glass transition temperature of from -20 to 30°C and a second polymer phase with a glass transition temperature of from 20 to less than 50°C, where the second polymer phase comprises from 2 to 10% by weight of acids copolymerizable with methacrylates, based on the entirety of the two polymer phases, where the glass transition temperature is calculated by means of the Fox equation.

2. Use of an aqueous dispersion according to Claim 1, **characterized in that** the dispersion made of at least two polymer phases comprises from 15 to 64% by weight of polymers which comprise from 25 to 78% by weight of alkyl ester of methacrylic acid, from 4 to 40% by weight of alkyl ester of acrylic acid, from 2 to 9% by weight of acids copolymerizable with methacrylates and up to 20% by weight of other monomers which are copolymerizable with (meth)acrylates, but which are not themselves (meth)acrylates.

3. Use of an aqueous dispersion according to Claim 1 or 2, **characterized in that** the polymers in the dispersion comprise from 49 to 65% by weight of an alkyl ester of methacrylic acid, from 17 to 30% by weight of an alkyl ester of acrylic acid, from 3 to 8% by weight of (meth) acrylic acid and from 8 to 15% by weight of styrene.

4. Use of an aqueous dispersion according to at least one of Claims 1 to 3, **characterized in that** the first polymer phase has a glass transition temperature of from -10 to 25°C, in particular from -5 to 5°C, and the second polymer phase has a glass transition temperature of from 30 to 45°C.

5. Use of an aqueous dispersion according to at least one of Claims 1 to 4, **characterized in that** the polymers in the dispersion also comprise from 2 to 12% by weight of an alkyl ester of (meth)acrylic acid having at least one other functional group.

6. Use of an aqueous dispersion according to Claim 5, **characterized in that** the alkyl ester of (meth)acrylic acid having at least one other functional group involves hydroxyethyl (meth)acrylate, and that the amount of this present in the polymers is from 3 to 7% by weight, preferably from 4 to 6% by weight.

7. Use of an aqueous dispersion according to Claim 1, **characterized in that** entirety of the polymers is composed of from 37 to 70% by weight of methyl methacrylate and/or butyl methacrylate, from 12 to 35% by weight of a C₁-C₄-alkyl ester of acrylic acid, from 3 to 7% by weight of a hydroxyfunctional (meth)acrylate, from 2 to 9% by weight of (meth) acrylic acid and from 4 to 20% by weight of styrene.

8. Use of an aqueous dispersion according to Claim 7, **characterized in that** entirety of the polymers is composed of from 49 to 65% by weight of methyl methacrylate and/or butyl methacrylate, from 20 to 30% by weight of a C₁-C₄-alkyl ester of acrylic acid, from 4 to 6% by weight of a hydroxyfunctional (meth)acrylate, from 5 to 7% by weight of (meth) acrylic acid and from 8 to 15% by weight of styrene.

9. Use of an aqueous dispersion according to at least one of Claims 1 to 8, **characterized in that** the aqueous dispersion has been produced by means of emulsion polymerization, where a first monomer mixture which leads to a polymer with a glass transition temperature of from -20 to 30°C is used as initial charge and, after polymerization of this monomer mixture, a second monomer mixture which leads to the polymer with a glass transition temperature of from 20 to less than 50°C is added, and polymerized, and that the two polymer phases take the form of a core-shell particle.

10. Use of an aqueous dispersion according to at least one of Claims 1 to 9, **characterized in that** the first monomer mixture comprises the hydroxyfunctional (meth)acrylates, that the second monomer mixture comprises the carboxylic acid copolymerizable with (meth)acrylates, and that the ratio by weight of the two monomer mixtures to one another is from 1:9 to 8:2.

11. Use of an aqueous dispersion according to at least one of Claims 1 to 10, **characterized in that** the second monomer mixture is polymerized to completion with the aid of a chain-transfer agent, preferably 0.2% by weight of n-DDM, based on monomer.

## Revendications

1. Utilisation d'une dispersion aqueuse dans un vernis thermoscellable pour le scellement de surfaces en aluminium contre le styrène, le PET, le PLA ou le PVC, **caractérisée en ce que** le vernis thermoscellable est appliqué en une couche sur la surface en aluminium avant le scellement, **en ce que** le vernis thermoscellable est constitué à hauteur d'au moins 50 % en poids de la dispersion aqueuse, et **en ce que** la dispersion aqueuse comprend une première phase polymère ayant une température de transition vitreuse comprise entre -20 et 30 °C et une seconde phase polymère ayant une température de transition vitreuse comprise entre 20 et moins de 50 °C, la seconde phase polymère contenant 2 à 10 % en poids d'acides copolymérisables avec des méthacrylates par rapport à la somme de deux phases polymères, la température de transition vitreuse étant calculée par l'équation de Fox.

2. Utilisation d'une dispersion aqueuse selon la revendication 1, **caractérisée en ce que** la dispersion d'au moins deux phases polymères contient entre 15 et 64 % en poids de polymères, qui comprennent 25 à 78 % en poids d'esters alkyliques de l'acide méthacrylique, 4 à 40 % en poids d'esters alkyliques de l'acide acrylique, 2 à 9 % en poids d'acides copolymérisables avec des méthacrylates, et jusqu'à 20 % en poids d'autres monomères, qui sont copolymérisables avec les (méth)acrylates, mais qui ne sont toutefois pas des (méth)acrylates eux-mêmes.

3. Utilisation d'une dispersion aqueuse selon la revendication 1 ou 2, **caractérisée en ce que** les polymères dans la dispersion contiennent 49 à 65 % en poids d'un ester alkylique de l'acide méthacrylique, 17 à 30 % en poids d'un ester alkylique de l'acide acrylique, 3 à 8 % en poids d'acide (méth)acrylique et 8 à 15 % en poids de styrène.

4. Utilisation d'une dispersion aqueuse selon au moins l'une quelconque des revendications 1 à 3, **caractérisée en ce que** la première phase polymère présente une température de transition vitreuse comprise entre -10 et 25 °C, notamment entre -5 et 5 °C, et la seconde phase polymère présente une température de transition vitreuse comprise entre 30 et 45 °C.

5. Utilisation d'une dispersion aqueuse selon au moins l'une quelconque des revendications 1 à 4, **caractérisée en ce que** les polymères dans la dispersion contiennent en outre 2 à 12 % en poids d'un ester alkylique de l'acide (méth)acrylique contenant au moins un groupe fonctionnel supplémentaire.

6. Utilisation d'une dispersion aqueuse selon la revendication 5, **caractérisée en ce que** l'ester alkylique de l'acide (méth)acrylique contenant au moins un groupe fonctionnel supplémentaire est le (méth)acrylate d'hydroxyéthyle, et **en ce que** celui-ci est contenu à hauteur de 3 à 7 % en poids, de préférence de 4 à 6 % en poids, dans les polymères.

7. Utilisation d'une dispersion aqueuse selon la revendication 1, **caractérisée en ce que** les polymères sont composés au total de 37 à 70 % en poids de méthacrylate de méthyle et/ou de méthacrylate de butyle, 12 à 35 % en poids d'un ester alkylique en C₁-C₄ de l'acide acrylique, 3 à 7 % en poids d'un (méth)acrylate à fonction hydroxy, 2 à 9 % en poids d'acide (méth)acrylique et jusqu'à 4 à 20 % en poids de styrène.

8. Utilisation d'une dispersion aqueuse selon la revendication 7, **caractérisée en ce que** les polymères sont composés au total de 49 à 65 % en poids de méthacrylate de méthyle et/ou de méthacrylate de butyle, 20 à 30 % en poids d'un ester alkylique en C₁-C₄ de l'acide acrylique, 4 à 6 % en poids d'un (méth)acrylate à fonction hydroxy, 5 à 7 % en poids d'acide (méth)acrylique et jusqu'à 8 à 15 % en poids de styrène.

9. Utilisation d'une dispersion aqueuse selon au moins l'une quelconque des revendications 1 à 8, **caractérisée en ce que** la dispersion aqueuse a été fabriquée par polymérisation en émulsion, un premier mélange de monomères, qui conduit au polymère présentant une température de transition vitreuse comprise entre -20 et 30 °C, étant chargé initialement, et, après la polymérisation de ce mélange de monomères, un second mélange de monomères, qui conduit au polymère présentant une température de transition vitreuse comprise entre 20 et moins de 50 °C, est ajouté et polymérisé, et **en ce que** les deux phases polymères se présentent sous la forme d'une particule noyau-enveloppe.

10. Utilisation d'une dispersion aqueuse selon au moins l'une quelconque des revendications 1 à 9, **caractérisée en ce que** le premier mélange de monomères contient les (méth)acrylates à fonction hydroxy, **en ce que** le second mélange de monomères contient l'acide carboxylique copolymérisable avec des (méth)acrylates, et **en ce que** le rapport en poids entre les deux mélanges de monomères l'un par rapport à l'autre est compris entre 1 sur 9 et 8 sur 2.

11. Utilisation d'une dispersion aqueuse selon au moins l'une quelconque des revendications 1 à 10, **caractérisée en ce que** le second mélange de monomères est polymérisé à l'aide d'un régulateur, de préférence 0,2 % en poids de n-DDM par rapport au monomère.
